## Europäisches Patentamt

## European Patent Office

## Office européen des brevets

(19)

(11) Publication number: **0 178 247 B1**

(12) **EUROPEAN PATENT SPECIFICATION**

(45) Date of publication of the patent specification:
24.08.88

(21) Application number: **85630166.8**

(22) Date of filing: **09.10.85**

(51) Int. Cl.⁴: **F 16 D 41/20,** F 16 F 1/06

(54) Overrunning clutch spring.

(30) Priority: **12.10.84 US 660332**
**12.10.84 US 660335**

(43) Date of publication of application:
**16.04.86 Bulletin 86/16**

(45) Publication of the grant of the patent:
**24.08.88 Bulletin 88/34**

(84) Designated Contracting States:
**DE FR GB IT**

(56) References cited:
**FR - A - 725 984**
**FR - A - 792 362**
**GB - A - 255 958**
**US - A - 1 553 515**
**US - A - 1 932 000**
**US - A - 1 934 790**
**US - A - 1 952 415**
**US - A - 1 983 824**
**US - A - 2 336 757**
**US - A - 2 673 730**

**Report No. USAAMRDL-TR-77-18: "Helicopter freewheel unit design guide (KISH, 1977) pp. 54-81**

(73) Proprietor: **UNITED TECHNOLOGIES CORPORATION, United Technologies Building 1, Financial Plaza, Hartford, CT 06101 (US)**

(72) Inventor: **Kish, Jules G., 147 Ocean Avenue, West Haven Connecticut 06516 (US)**

(74) Representative: **Weydert, Robert et al, OFFICE DENNEMEYER S.à.r.l. P.O. Box 1502, L-1015 Luxembourg (LU)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

# Description

This invention relates to a method of reducing the centrifugal imbalance of an overrunning clutch spring having coils that increase exponentially in axial thickness toward the center of the spring, and also concerns an overrunning clutch spring of the type referred to.

High-torque overrunning clutches allow for autorotation in helicopters and permit operation with one engine driving and the other shut down. An overrunning clutch spring of the type described in the precharacterizing portion of claims 1 and 4 is disclosed in Report No. USAAMRDL-TR-77-18, entitled HELICOPTER FREEWHEEL UNIT DESIGN GUIDE (Kish, 1977) at pp 54–81. In the known spring, where the coils go from increasing thickness to decreasing thickness an axial cut is made which produces an abrupt increase in axial thickness and results in a large gap at the central crossover point. This gap represents a substantial centrifugal imbalance.

Reference is also made to US-A-2673730 which discloses a spring having a varying axial thickness and to FR-A-792632 which discloses a spring having a varying radial thickness.

The object of the invention is to reduce the centrifugal imbalance of an overrunning clutch spring having coils that increase exponentially in axial thickness toward the center of the spring.

In accordance with the invention this is achieved by the feature stated in the characterizing portion of both claims 1 and 4. By this feature a much smaller crossover gap is obtained and the centrifugal imbalance is accordingly reduced.

The clutch spring may be produced from tube stock and notches may be formed in the ends of the spring for «squaring off» the end coils of the spring. To avoid imbalance due to these notches, they are in one embodiment positioned opposite the central crossover point.

The clutch spring will now be described in greater detail with reference to the drawings, wherein:

Fig. 1 is a side, partial cutaway view of a spring clutch, for which the spring of this invention is intended;

fig. 2 is a perspective view of the spring of this invention in its compressed state;

fig. 3 is a perspective view of the spring of this invention in its precompressed state;

fig. 4 is a schematic of the coils of the spring of this invention, in their precompressed (A) and compressed (B) states;

fig. 5 is a schematic of the central crossover coils of a prior art spring, in their precompressed (A) and compressed (B) states;

fig. 6 is a schematic of the central crossover coils of the spring of this invention, in precompressed (A) and compressed (B) states;

figs. 7A–7G are side views illustrating the manufacturing technique for a clutch spring;

fig. 8 is a perspective view of the clutch spring of this invention.

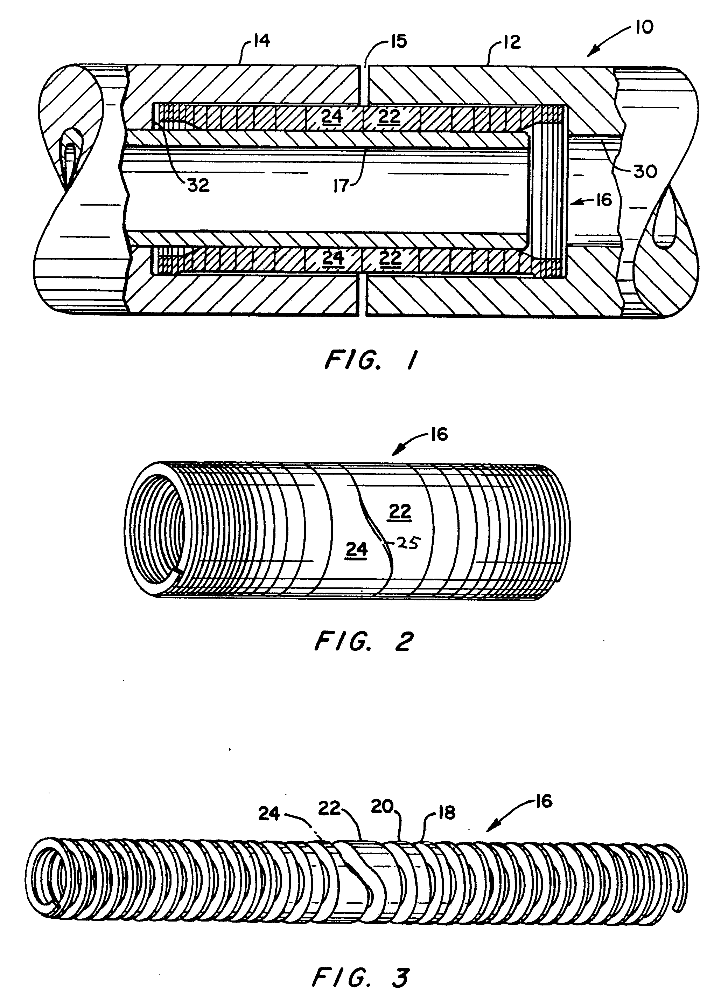

In fig. 1 is shown an overrunning clutch 10 having a cylindrical input member 12 and a cylindrical output member 14 in coaxial, end-to-end juxtaposition, with a gap 15 therebetween. The inner diameters (ID) of the clutch members 12 and 14 are constant and identical in a region wherein there is disposed a clutch spring 16, which is shown in an isolated perspective view in fig. 2. The oudside diameter (OD) of the spring 16 is greatest at the ends and smaller in a central portion. The ends are in radial contact with the ID of the clutch members 12 and 14, and there is a clearance between the spring 16 and the ID of the clutch members 12 and 14 in the central portion of the spring 16, which is exaggerated in fig. 1. When the input member 12 rotates faster than the output member 14, and in a direction counter to the pitch of the spring coils, the spring 16 expands radially so that it is in driving contact with the ID of the clutch members 12 and 14 along its entire length to drive torque therebetween. In the overrunning condition, the faster rotation of the output member 14, in the direction of the spring pitch, tends to radially contract the spring, thereby disengaging the drive. An arbor 17 is provided inside of the spring 16 to position it in the overrunning state. This is shown in US-A-1934790 (Brownlee, 1933), entitled OVERRUNNING SPRING CLUTCH; US-A-1952415 (Brownlee, 1934), entitled OVERRUNNING CLUTCH; and in SAE Technical Paper No. 781039 (Kish, 1978).

As is best viewed in fig. 2, the first few coils at either end are of constant thickness, but the thickness, or pitch, of the coils increases exponentially towards the center of the spring 16, with the center two coils 22 and 24 being the thickest. This is for constant stress, as described in Report No. USAAMRDL-TR-77-18, entitled HELICOPTER FREEWHEEL UNIT DESIGN GUIDE (Kish, 1977) at pp 54–81. Nonuniform coil thicknesses are disclosed in US-A-1932000 (Starkey, 1933), entitled CLUTCH SPRING, and US-A-1983824 (Starkey, 1934), entitled SPRING CLUTCH.

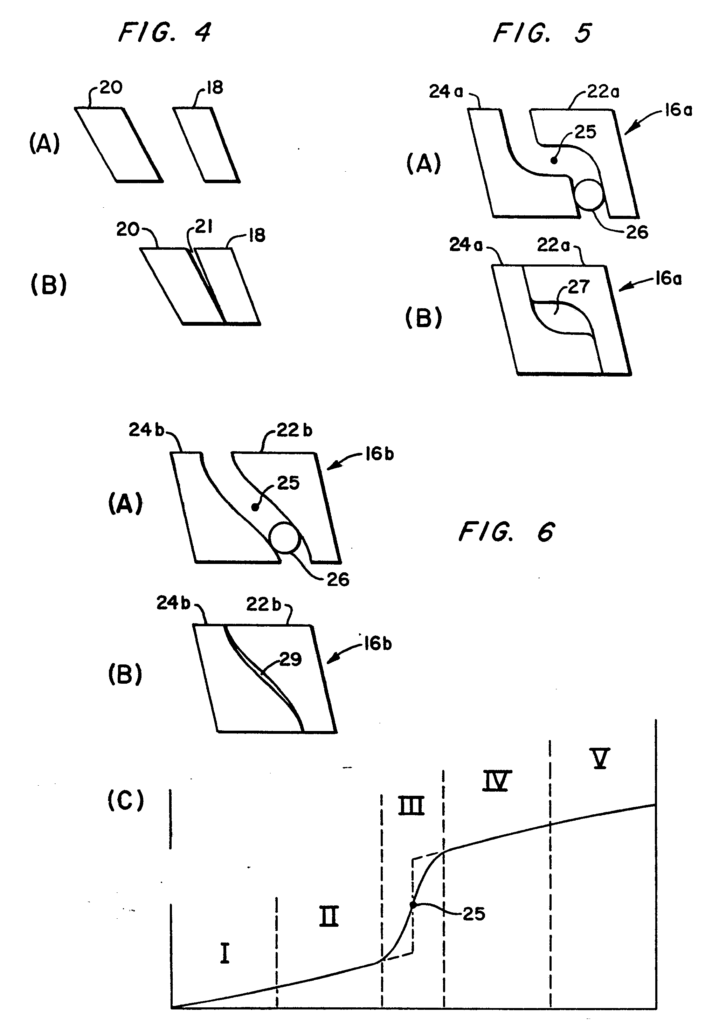

. The spring 16 is manufactured in a «precompressed» state, as shown in fig 3. The technique is similar to machining a thread and includes rotating tube stock and axially advancing an end mill to cut the coils. The «lead» of the end mill determines the pitch of the coils. The spring is then compressed and heat-treated so that the coils remain touching. The exponentially increasing pitch results in a space between adjacent coils in the compressed state. Consider the adjacent coils 18 and 20. Fig. 4A shows the coils 18 and 20 in their precompressed state. From right to left, as viewed, the pitch of the coils increases towards the center of the spring. When the coils 18, 20 are compressed, as shown in fig. 4B, there is a space 21 between the coils 18, 20, which causes the spring to bend slightly when compressed. However, the bend is eliminated in the final machining steps, such as grinding.

## Central crossover gap

Maximizing the thickness (width) of the two center coils 22, 24 increases the load capacity of the spring. However, spring length is limited.

Therefore, it is known to abruptly increase the thickness of the center coils 22, 24 at a center crossover point in the following manner.

Fig. 5A shows the center coils 22a and 24a of a spring 16a in their precompressed state. At the center crossover point 25, where the coils go from increasing thickness to decreasing thickness, an axial cut is made which abruptly increases the thickness of the coils 22a, 24a. In other words, envisioning the manufacturing process, a cutter 26 is axially fed along the rotating tube stock until it reaches the crossover point 25 whereat the rotation of the tube stock ceases so that an axial cut, rather than a pitched cut is made. As shown in fig. 5B, which represents the spring 16a in its compressed state, the abrupt increase in coil thickness results in a gap 27 at the central crossover point. The dimensions of the gap 27 are related to the length of the axial cut and the diameter of the cutter 26.

The central crossover gap 27 represents an imbalance which can be consequential at high RPM, such as when the spring clutch is on the output shaft of a turbine engine. For instance, a gap measuring 10.9 mm (axial cut) by 6.35 mm (cutter diameter) by 7.11 mm (material thickness), in a spring having a radius of 1.52 mm would generate a centrifugal imbalance in excess of five hundred seventy-eight Newtons at 30,000 RPM. This is not acceptable in the context of an overrunning clutch on the turbine output shaft in a helicopter, and provides an impetus for reducing the imbalance by shrinking the gap and/or offsetting the imbalance. Using a smaller cutter would reduce one dimension of the gap, but would compromise tool strength and life. Drilling holes opposite the crossover gap would compromise coil strength.

In fig. 6A is shown the center coils 22b, 24b of a spring 16b in its precompressed state. Rather than abruptly increasing the coil thickness, the thickness is gradually increased at a rate greater than the exponential rate in a region extending from 45 degrees before to 45 degrees after the crossover point 25. As shown in fig. 6B, the compressed spring 16b has a much smaller crossover gap 29 than that of the previous example (27), yet the net increase in central coil thickness is the same.

The gap 29 measures one-fourth of the spring circumference (i.e. a ninety degrees arc) by 1.27 mm at the crossover point 25, and results in a centrifugal imbalance of less than forty-five Newtons at 30,000 RPM.

Fig. 6C shows cutter position versus spring rotation (turns) for the spring of this invention. For the end coils, the cutter is fed in axially at a constant rate (lead) in a region I. Then, the lead is exponential in a region II that extends to forty-five degrees, or one-eighth turn before the center crossover point 25. In a region III that extends from forty-five degrees before the crossover point 25 to forty-five degrees after the crossover point 25, the lead is a since function that is tailored to blend into the exponential function of region II. Region IV is the mirror image of Region II, and Region V is the mirror image of Region I for the other half of the spring. The prior art technique that results in the spring 16a of fig. 5 is shown in dotted lines.

Squared ends

As shown in fig. 1, the clutch members 12 and 14 have shoulders 30 and 32 on the ID that abut the spring end faces. When the end coils are cut on a helix corresponding to a lead equal to the first coil width, as shown in fig. 3, the end faces are not perpendicular to the spring axis. Therefore, any tendency for rubbing between the end faces of the spring and the shoulders 30, 32 is concentrated at the extreme end of the first coil of each end, resulting in a tendency for the spring to skew during overrunning, point contact on the end coils during repeated load and wear, and nonuniform distribution of axial load. By «squaring-off» the coil ends, these problems would be eliminated. Simply grinding the end of the spring flat results in an end coil of diminishing (to zero) thickness, as shown in US-A-2673730 (Hupp, 1954), entitled SPRING FOR SPRING CLUTCHES, and is not an acceptable solution to these problems.

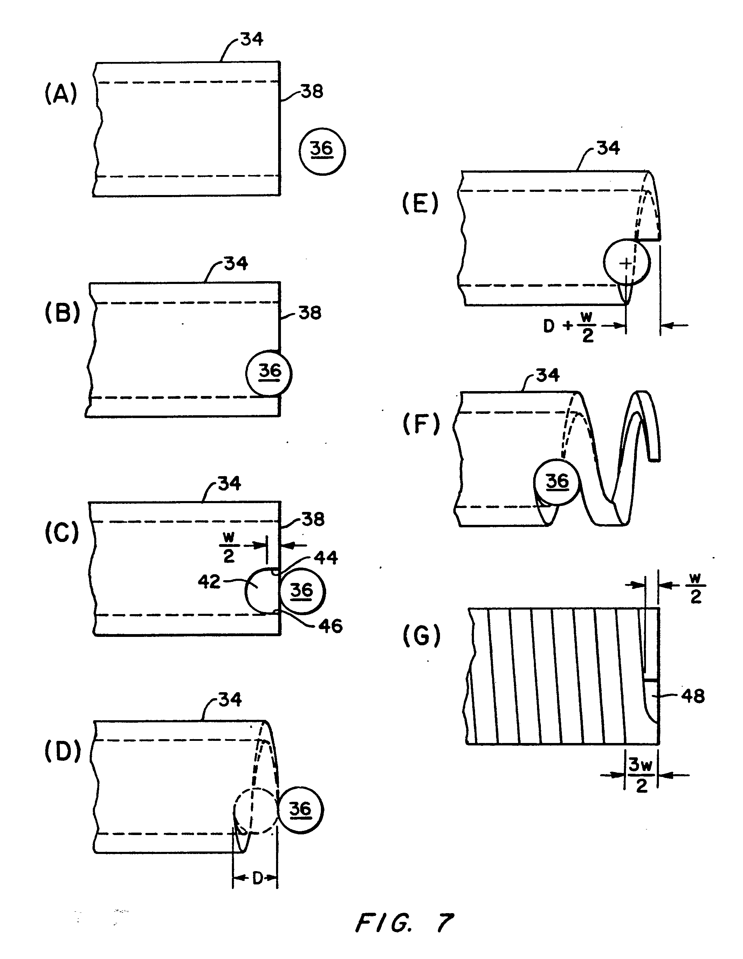

Figs. 7A–7G illustrate a technique for manufacturing a spring with squared ends. The tube stock 34 for a spring 16 is shown in fig. 7A. A cutter, such as an end mill 36 having a diameter (D), cuts radially into the tube stock 34. As shown in fig. 7B, the cutter 36 is axially fed into the nonrotating tube stock 34 from an end 38 a distance equal to D/2 + W/2, where (W) is the desired width of an end coil. This results in a notch 42 having edges 44 and 46 that are square with respect to the end 38 of the tube stock 34 for a distance of W/2, as shown in fig. 7C.

An end coil is cut in the tube stock by positioning the cutter 36 tangent to the end of the tube stock 34, and simultaneously axially feeding the cutter 36 into the tube stock 34 and rotating the tube stock one turn so that the cutter 36 ends up in the position shown in phantom in fig. 7D. The first or «end» coil is cut with a lead equal to the cutter diameter.

The cutter 36 is then fed axially towards the center of the spring, without rotating the tube stock, a distance equal to W/2, as shown in fig. 7E. Then the cutting process resumes by rotating the tube stock 34 and axially feeding the cutter 36 towards the opposite end of the tube stock 34 (not shown). The lead for these subsequent coils is equal to the cutter diameter plus the coil width.

As shown in fig. 7F, this results in an end coil that varies in thickness from W/2 to 3W/2, for an average thickness of (W). As discussed hereinbefore with reference to fig. 3, the end coils are of constant thickness, and towards the center of the spring the feed rate is increased so that the coil thickness increases exponentially.

When the spring 16 is compressed, as shown in fig. 7G, the end 38 is flat and perpendicular to the spring axis, which addresses the problems discussed hereinbefore. However, there is a notch 48 at the end of the spring 16 as a result of «squaring off» the ends. As with the center gap discussed previously, the end notches 48 create an imbalance in the spring.

## Balancing the spring

As described hereinbefore, reducing the crossover gap results in a centrifugal imbalance of less than forty-five Newtons at 30,000 RPM. It is desirable to further reduce the imbalance.

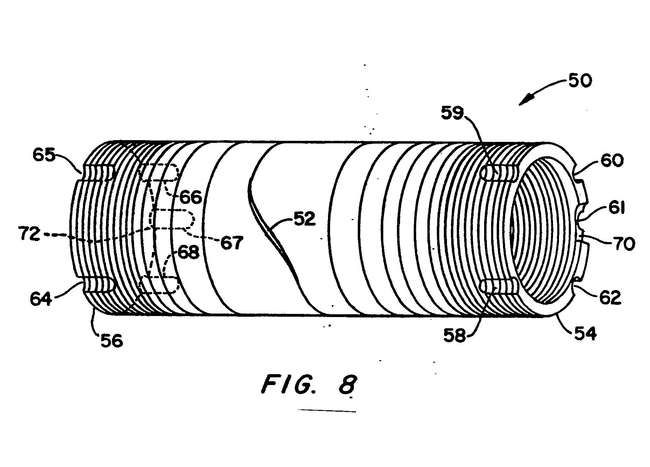

In fig. 8 is shown a clutch spring 50 combining the features of minimizing the central crossover gap 52 and squaring-off the ends 54 and 56. An additional feature of the spring 50 is that there are recesses 58–62 disposed in the end 54, and corresponding recesses 64–68 in the end 56. The recesses 58–68 are for lubrication on the ends of the spring 50 that are in slipping engagement with the clutch members during overrunning. The placement of the recesses 58–68 around the circumference of the spring is not critical for lubrication purposes, to avoid imbalance it is sufficient that there are at least a few disposed more-or-less evenly about the circumference. The recesses 58–68 represent missing material which will create a spring imbalance. However, by advantageously locating the recesses 58–68 and the end notches 70 and 72, imbalance caused by the center crossover gap 52 can be corrected. Consider the following example.

The crossover gap 52 spans plus and minus forty-five degrees from a nominal «center» at ZERO azimuth. As discussed hereinbefore with reference to fig. 6, the gap 52 cause a centrifugal imbalance of, for example, forty Newtons at 30,000 RPM.

It is a relatively simple matter to locate the end notches 70, 72 associated with squaring-off the ends 54, 56 at any azimuth, without significantly affecting the overall length of the spring 50. For this example, the notches 70, 72 are located at one hundred eighty degrees from the central crossover point. This nearly compensates for the imbalance created by the crossover gap 52.

A symmetric distribution of oil notches around the azimuth would have no net effect on centrifugal imbalance. Therefore, the oil notches 58–68 are slightly nonsymmetrically distributed around the azimuth to correct for any remaining imbalance. In this example, the slots 58, 59 and 64, 65 are located at +/– forty-five degrees from the crossover point, the slots 60, 62 and 66, 68 are located at +/– one hundred twenty-seven degrees from the crossover point, and the slots 61 and 67 are located at one hundred eighty degrees opposite the crossover point. This results in virtually no centrifugal imbalance.

## Claims

1. A method of reducing the centrifugal imbalance of an overrunning clutch spring (16), having coils that increase exponentially in axial thickness toward the center of the spring (16), characterized by the step of:

increasing the axial thickness of the coils gradually, at a rate greater than the exponential rate in a region (III) that includes a center crossover point (25) for the spring.

2. Method of producing an overrunning clutch spring (16) according to claim 1 from tube stock so that in a final, compressed state the spring ends are square, characterized by the steps of:

axially notching the tube stock with a cutter having a diameter (D);

cutting the first coil on a lead equal to the diameter (D) so that it varies in thickness from W/2 at its end (44) to 3W/2, where (W) is the desired thickness of the first coil; and

cutting subsequent coils on a lead equal to the diameter (D) plus the desired coil thickness.

3. Method of balancing an overrunning clutch spring according to claim 2, characterized by the steps of:

positioning the notches (70, 72) resulting from the squared ends opposite the crossover point (25) to minimize the centrifugal imbalance of the spring.

4. Overrunning clutch spring having coils that increase exponentially in axial thickness toward the center of the spring (16), characterized in that

the axial thickness of the coils increases gradually at a rate greater than the exponential rate in a region (III) that includes a center crossover point (25) for the spring.

5. Overrunning clutch spring according to claim 4, characterized in that the region (III) extends forty-five degrees before and after the center crossover point (25).

## Patentansprüche

1. Verfahren zum Reduzieren der Unwucht einer Freilaufkupplungsfeder (16), die Windungen hat, welche in der axialen Dicke zur Mitte der Feder (16) hin exponentiell zunehmen, gekennzeichnet durch folgende Schritte:

allmähliches Vergrössern der axialen Dicke der Windungen mit einer Geschwindigkeit, die grösser ist als die Exponentialgeschwindigkeit, in einem Gebiet (III), welches einen mittigen Übergangspunkt (25) für die Feder enthält.

2. Verfahren zum Herstellen einer Freilaufkupplungsfeder (16) nach Anspruch 1 aus Rohrmaterial, so dass im fertigen, zusammengedrückten Zustand die Federenden rechtwinklig zur Federachse sind, gekennzeichnet durch folgende Schritte:

axiales Einschneiden des Rohrmaterials mit einem Fräser, der einen Durchmesser (D) hat;

Schneiden der ersten Windung mit einer Steigung, die gleich dem Durchmesser (D) ist, so dass sie sich in der Dicke von W/2 an ihrem Ende (44) auf 3W/2 verändert, wobei (W) die gewünschte Dicke der ersten Windung ist; und

Schneiden von anschliessenden Windungen mit einer Steigung, die gleich dem Durchmesser (D) plus der gewünschten Windungsdicke ist.

3. Verfahren zum Auswuchten einer Freilaufkupplungsfeder nach Anspruch 2, gekennzeichnet durch folgende Schritte:

Positionieren der Einschnitte (70, 72), die aus den rechtwinklig gemachten Enden resultieren, gegenüber dem Übergangspunkt (25), um die Unwucht der Feder zu minimieren.

4. Freilaufkupplungsfeder mit Windungen, die in der axialen Dicke zur Mitte der Feder (16) hin exponentiell zunehmen, dadurch gekennzeichnet, dass die axiale Dicke der Windungen mit einer Geschwindigkeit allmählich zunimmt, die grösser ist als die Exponentialgeschwindigkeit, in einem Gebiet (III), das einen mittigen Übergangspunkt (25) für die Feder enthält.

5. Freilaufkupplungsfeder nach Anspruch 4, dadurch gekennzeichnet, dass sich das Gebiet (III) 45° vor und hinter dem mittigen Übergangspunkt (25) erstreckt.

## Revendications

1. Procédé pour réduire le déséquilibre centrifuge d'un ressort (16) d'embrayage ou d'accouplement à glissement ou à roue libre, ce ressort comportant des spires dont l'épaisseur axiale augmente de façon exponentielle vers le milieu du ressort (16), ce procédé étant caractérisé par le fait qu'il comprend la phase qui consiste à augmenter progressivement l'épaisseur axiale des spires, à un taux supérieur au taux exponentiel, dans une zone (III) qui comprend le point central de passage ou de croisement (25) du ressort.

2. Procédé de fabrication d'un ressort d'embrayage ou d'accouplement à glissement ou à roue libre selon la revendication 1, à partir d'une ébauche tubulaire, de telle sorte que, dans l'état final et sous compression, les extrémités du ressort soient d'équerre par rapport à l'axe, ce procédé étant caractérisé en outre par les phases qui consistent:

a) à former des encoches axiales dans l'ébauche tubulaire avec un outil de coupe ayant un diamètre (D);

b) à découper la première spire avec une avance d'outil égale au diamètre (D), de manière que l'épaisseur de cette spire augmente de W/2 à son extrémité (44) à 3W/2, (W) étant l'épaisseur désirée de la première spire, et

c) à découper les spires suivantes avec une avance égale au diamètre (D) plus l'épaisseur désirée de la spire.

3. Procédé d'équilibrage d'un ressort d'embrayage ou d'accouplement à glissement ou à roue libre selon la revendication 2, caractérisé par la phase qui consiste à disposer les encoches (70, 72) qui résultent de la revendication 2 (a), aux extrémités mises à l'équerre du ressort, de part et d'autre du point de passage (25) afin de réduire au minimum le déséquilibre centrifuge du ressort.

4. Ressort pour accouplement ou embrayage à glissement ou à roue libre, dans lequel l'épaisseur axiale des spires augmente de façon exponentielle vers le milieu du ressort (16), caractérisé en ce que l'épaisseur axiale des spires augmente progressivement à un taux supérieur au taux exponentiel dans une zone (III) qui comprend un point central de passage (25) pour le ressort.

5. Ressort pour accouplement ou embrayage à glissement ou à roue libre selon la revendication 4, caractérisé en ce que ladite zone (III) s'étend sur quarante-cinq degrés avant et après le point central de passage (25).

0178247

FIG. 1

FIG. 2

FIG. 3

7

FIG. 4

(A)

20 18

(B)

20 21 18

FIG. 5

(A)

24a 22a 16a
25
26

(B)

24a 22a 16a
27

(A)

24b 22b 16b
25
26

FIG. 6

(B)

24b 22b 16b
29

(C)

I  II  III  IV  V
25

(A)

(B)

(C)

(D)

(E)

(F)

(G)

FIG. 7

FIG. 8